# EUROPÄISCHE PATENTSCHRIFT

(11) **EP 0 950 820 B1**
(45) Veröffentlichungstag und Bekanntmachung des Hinweises auf die Patenterteilung: **02.06.2004**
(21) Anmeldenummer: 99250109.8
(22) Anmeldetag: 08.04.1999
(51) Int. Cl.: F16B 21/18

(54) **Sicherungsring**
Retaining ring
Bague de retenue

(30) Priorität: 17.04.1998 DE 19817932
(43) Veröffentlichungstag der Anmeldung: 20.10.1999
(73) Patentinhaber: Demag Cranes & Components GmbH, 58300 Wetter (DE)
(72) Erfinder: Staggl, Roland, 58300 Wetter (DE); Flaig, Heinz, 44801 Bochum (DE); Gievers, Winfried, 58300 Wetter (DE); Osthoff, Hans-Hermann, 58300 Wetter (DE); Steinkopf, Jan-Helge, 58300 Wetter (DE); Saeftel, Josef Paul, 44575 Castrop-Rauxel (DE); Jansen, Gregor, 46244 Bottrop (DE); Stöber, Manfred, 58453 Witten (DE); Becker, Eberhard, 58093 Hagen (DE); Düllmann, Thomas, 58099 Hagen (DE)
(74) Vertreter: Moser, Jörg Michael, Dipl.-Ing.

(56) Entgegenhaltungen:
- DE-A- 2 319 435
- DE-A- 3 606 037
- US-A- 4 142 704
- US-A- 4 692 079

## Beschreibung

Die Erfindung betrifft einen Sicherungsring gemäß dem Obergriff des Anspruchs 1.

Sicherungsringe mit einer zentralen, insbesondere zylindrischen Ringöffnung sind allgemein bekannt, insbesondere aus der DE 23 19 435 B2 (Fig. 6A und 6B). Derartige Sicherungsringe sind an einer Stelle durchtrennt, so daß diese zwei einander gegenüberliegende Ringenden aufweisen. Die Durchtrennung ist in Form eines radial verlaufenden Schlitzes ausgebildet. Die Ringenden sind häufig radial verbreitert und jeweils mit einer Durchgangsöffnung versehen. Die Durchgangsöffnungen verlaufen dabei parallel zueinander und senkrecht zur Ringebene des flachen Sicherungsringes. Die radiale Ringbreite nimmt in der Regel auf beiden Ringseiten zu den Ringenden hin ab; die Ringdicke ist konstant. In die als zylindrische Durchgangsbohrungen ausgebildete Durchgangsöffnungen sind die oberen Enden einer Spreizzange einsteckbar. Mit Hilfe der Spreizzange werden die Ringenden nach außen gedrückt, so daß der Sicherungsring in eine Radialnut eines Bolzens oder dgl. einsetzbar ist.

Um derartige Sicherungsringe auch dann einsetzen zu können, wenn senkrecht zur Ringebene nur wenig Platz vorhanden ist, werden zum Einsetzen gekröpfte Spreizzangen verwendet.

Die DE 23 19 435 B2 zeigt eine weitere Lösung, bei der unter Bildung einer Aussparung aus den Endbereichen ein L-förmiges Element ausgebogen ist, das in Umfangsrichtung des Sicherungsrings verläuft. Die beiden L-förmigen Elemente liegen dabei mit ihrer offenen Seite einander gegenüber, so daß eine entsprechend ausgebildete Spreizzange in diese eingreifen und die beiden Ringenden nach außen auseinanderdrücken kann.

Nachteilig bei diesem Sicherungsring ist seine aufwendige Herstellung.

Der Erfindung liegt die Aufgabe zugrunde, einen Sicherungsring zu schaffen, der mit nicht gekröpften Breitzangen auch dann mit geringem Aufwand einsetzbar ist, wenn nur ein schmaler Spalt zum Einbau vorhanden ist, und der leicht herzustellen ist.

Die Lösung dieser Aufgabe ist gekennzeichnet durch die im Patentanspruch 1 angegebenen Merkmale. Durch die kennzeichnenden Merkmale der Unteransprüche 2 bis 7 ist der Sicherungsring in vorteilhafter Weise weiter ausgestaltet.

Die Lösung sieht vor, daß die beiden L-förmig ausgebildeten Ringenden jeweils einen aus der Ringebene weisenden Vorsprung mit jeweils einer Durchgangsöffnung aufweisen, daß die beiden Vorsprünge auf derselben Seite der Ringebene liegen und daß die beiden Durchgangsöffnungen parallel zueinander und zur Ringebene verlaufen. Es handelt sich bei der Lösung also um einen "gekröpften" Sicherungsring, der zum Einbau nur einen kleinen Spalt benötigt, der etwas breiter als der Sicherungsring selbst ist. Hierbei reicht eine zugängliche Spaltbreite aus, die der Dicke der üblichen Spreizzangen entspricht. Die Spreizzange selbst braucht hierbei vorteilhafterweise nicht gekröpft ausgeführt sein.

Die Handhabung des Sicherungsringes, insbesondere beim Einsetzen, vereinfacht sich, wenn die beiden Vorsprünge in einer gemeinsamen senkrecht zur Ringebene ausgerichteten Ebene liegen und wenn die Durchgangsöffnungen parallel zur Symmetrieachse verlaufen. Das Einsetzen des Sicherungsrings bereitet keinerlei Schwierigkeiten, wenn die Ebene parallel zu der senkrecht zur Symmetrieachse verlaufenden Tangentialebene der Ringöffnung angeordnet ist.

Die Herstellung des Sicherungsrings ist relativ einfach, wenn die beiden Vorsprünge durch Biegen der radial nach außen verbreiterten Ringenden aus der Ringebene gebildet sind und die beiden Durchgangsöffnungen vor dem Biegen senkrecht zur Ringebene verlaufen.

Der Einsatzbereich vergrößert sich, wenn die Durchgangsöffnungen mit Abstand zur Ringebene verlaufen, weil dann der Sicherungsring eine flache Seite ohne Vorsprünge aufweist.

Im einfachsten Fall ist jede Durchgangsöffnung ein durch den Vorsprung verlaufendes zylindrisches Loch.

Ein Ausführungsbeispiel der Erfindung ist in der Zeichnung dargestellt und wird nachfolgend näher beschrieben. Es zeigen:
- Fig. 1: eine perspektivische Darstellung eines Sicherungsringes,
- Fig. 2: eine Vorderansicht auf den Sicherungsring gemäß Fig. 1,
- Fig. 3: eine Draufsicht auf den Sicherungsring gemäß Fig. 1 und
- Fig. 4: eine Seitenansicht des Sicherungsringes gemäß Fig. 1.

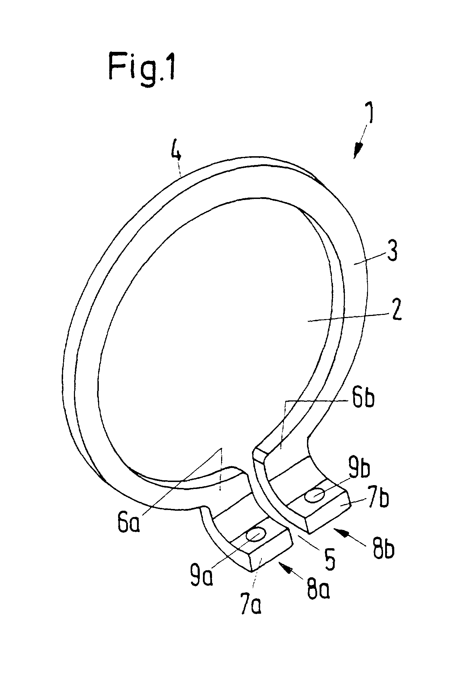

Fig. 1 zeigt in einer räumlichen Darstellung einen aus Federstahl gefertigten Sicherungsring 1 mit einer zentralen zylindrischen Ringöffnung 2. Der flache Sicherungsring 1 weist zwei ringförmige Seitenflächen 3, 4 auf, die parallel zueinander angeordnet sind. Wie Fig. 1 ebenfalls zeigt, ist der Sicherungsring 1 an einer Stelle durch eine Schlitzöffnung 5 aufgetrennt, die durchgehend radial von innen nach außen verläuft (durchgehenden Schlitz). An der Schlitzöffnung 5 liegen sich die beiden durch die Schlitzöffnung 5 gebildeten Ringenden 6a, 6b gegenüber. Die Ringenden 6a, 6b sind radial nach außen verbreitert und diese Verbreiterungen 7a, 7b aus der Ringebene heraus gebogen, so daß sich im Querschnitt eine L-Form ergibt. Die dabei gebildeten aus der Ringebene weisenden Vorsprünge liegen auf derselben Ringebenenseite und sind senkrecht zur Ringebene ausgerichtet.

Fig. 1 zeigt, daß beide Vorsprünge 8a, 8b in einer gemeinsamen Ebene liegen. Diese Ebene verläuft parallel zu der Tangentialebene, die tangential zur inneren oder äußeren Zylinderfläche der Ringöffnung 2 ausgerichtet ist, und zwar an der Schlitzöffnung 5, durch die auch die Symmetrieachse 10 des Sicherungsrings 1 geht. Beide Ebenen, also auch die Tangentialebene, verlaufen senkrecht zur Symmetrieachse 10.

Selbstverständlich ist das Hochbiegen der radial verbreiterten Enden 6a, 6b nur eine Möglichkeit, um die Vorsprünge 8a, 8b zu bilden. Die Vorsprünge 8a, 8b können auch in beliebiger anderer Weise gebildet werden.

Gemäß Fig. 1 ist an jedem Vorsprung 8a, 8b eine Durchgangsöffnung 9a, 9b in Form einer Durchgangsbohrung angeordnet, also ein zylindrisches Loch. Die Durchgangsöffnungen 9a, 9b verlaufen parallel zueinander und außerdem parallel zur Ringebene und zur Symmetrieachse 10. Im Ausführungsbeispiel sind beide Durchgangsöffnungen 9a, 9b folglich parallel zur Schlitzöffnung 5 ausgerichtet. In die beiden Durchgangsöffnungen 9a, 9b greifen zum Auseinanderdrücken der beiden Ringenden 6a, 6b die oberen Enden einer einfachen nicht gekröpften Spreizzange formschlüssig ein, was eine einfache und sichere Handhabung garantiert.

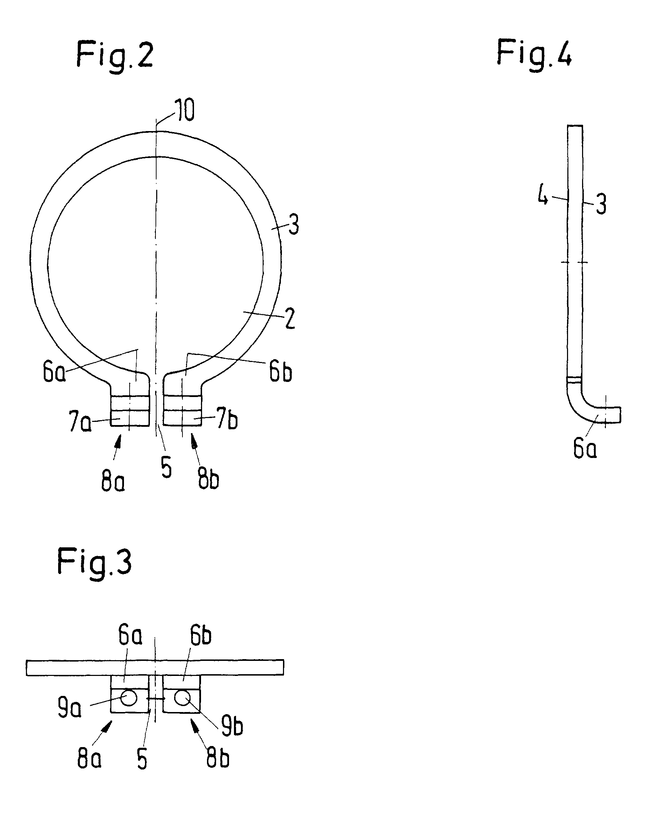

Fig. 2 zeigt eine Vorderansicht des Sicherungsringes 1, wobei insbesondere erkennbar ist, daß die radiale Ringbreite beidseitig der Symmetrieachse 10 ausgehend von der den Ringenden 6a, 6b gegenüberliegenden Ringseite kontinuierlich abnimmt. Die radiale Abnahme der Ringbreite kann auch abschnittsweise erfolgen, d. h. an einen Bereich mit konstanter Ringbreite kann sich ein Bereich mit kontinuierlich abnehmender Ringbreite anschließen. Die Ringenden 6a, 6b sind dann wie in Fig. 2 dargestellt ausgebildet.

Fig. 3 zeigt eine Draufsicht auf den Sicherungsring 1, wobei insbesondere die parallel zueinander angeordneten Durchgangsöffnungen 9a, 9b zu erkennen sind.

Fig. 4 zeigt eine Seitenansicht des Sicherungsrings 1. Diese Seitenansicht zeigt insbesondere die aus der Ringebene L-förmig herausgebogenen Ringenden 6a, 6b. Die Ringebene und die Ebene der Vorsprünge 8a, 8b stehen in Fig. 4 senkrecht aufeinander.

### Bezugszeichenliste:

- 1: Sicherungsring
- 2: Ringöffnung
- 3: Seitenfläche
- 4: Seitenfläche
- 5: Schlitzöffnung
- 6a: Ringenden
- 6b: Ringenden
- 7a: Verbreiterungen
- 7b: Verbreiterungen
- 8a: Vorsprünge
- 8b: Vorsprünge
- 9a: Durchgangsöffnung
- 9b: Durchgangsöffnung
- 10: Symmetrieachse

## Patentansprüche

1. Sicherungsring, insbesondere aus Federstahl hergestellte Halteringe für Wellen, mit einer Ringöffnung (2) und einem durchgehenden Schlitz (5), an dem sich zwei jeweils eine Durchgangsöffnung (9a, 9b) aufweisende und in Bezug auf den angrenzenden Ring sich radial nach außen verbreiternde Ringenden (6a, 6b) gegenüberliegen,
wobei die radiale Ringbreite beidseitig zur Symmetrieachse angrenzend und ausgehend von den verbreiterten Ringenden (6a, 6b) zumindest abschnittswiese kontinuierlich zunimmt,
**dadurch gekennzeichnet,**
**daß** die beiden L-förmig ausgebildeten Ringenden (6a, 6b) jeweils einen aus der Ringebene weisenden Vorsprung (8a, 8b) mit jeweils einer Durchgangsöffnung (9a, 9b) aufweisen, daß die beiden Vorsprünge (8a, 8b) auf derselben Seite der Ringebene liegen, daß die beiden Durchgangsöffnungen (9a, 9b) parallel zueinander und zur Ringebene verlaufen, daß die Durchgangsöffnungen (9a, 9b) parallel zur Symmetrieachse (10) verlaufen und daß die beiden Vorsprünge (8a, 8b) in einer gemeinsamen senkrecht zur Ringebene ausgerichteten Ebene liegen.

2. Sicherungsring nach Anspruch 1,
**dadurch gekennzeichnet,**
**daß** die Ebene parallel zu der senkrecht zur Symmetrieachse (10) verlaufenden Tangentialebene der Ringöffnung (2) angeordnet ist.

3. Sicherungsring nach einem der Ansprüche 1 bis 2,
**dadurch gekennzeichnet,**
**daß** die beiden Vorsprünge (8a, 8b) durch Biegen der radial nach außen verbreiterten Ringenden (6a, 6b) aus der Ringebene gebildet sind.

4. Sicherungsring nach Anspruch 3,
**dadurch gekennzeichnet,**
**daß** die beiden Durchgangsöffnungen (9a, 9b) vor dem Biegen senkrecht zur Ringebene verlaufen.

5. Sicherungsring nach einem der Ansprüche 1 bis 4,
**dadurch gekennzeichnet,**
**daß** jede Durchgangsöffnung (9a, 9b) ein durch den Vorsprung (8a, 8b) verlaufendes zylindrisches Loch ist.

## Claims

1. Retaining ring, particularly a retaining ring made from spring steel for shafts, with a ring opening (29) and a continuous slot (5) on which two ring ends (6a, 6b) each having a through hole (9a, 9b) and widening radially outwards with respect to the adjoining ring lie opposite one another, wherein the radial ring width increases continuously at least in sections on both sides of and adjoining the axis of symmetry and starting from the widened ring ends (6a, 6b), **characterised in that** the two L-shaped ring ends (6a, 6b) each have a projection (8a, 8b) pointing out of the ring plane and provided in each case with a through hole (a, 9b), that the two projections (8a, 8b) lie on the same side of the ring plane, that the two through holes (9a, 9b) extend parallel to one another and to the ring plane, that the through holes (9a, 9b) extend parallel to the axis of symmetry (10) and that the two projections (8a, 8b) lie in a common plane oriented perpendicular to the ring plane.

2. Retaining ring as claimed in Claim 1, **characterised in that** the plane is disposed parallel to the tangential plane of the ring opening (2) extending perpendicular to the axis of symmetry (10).

3. Retaining ring as claimed in one of Claims 1 to 2, **characterised in that** the two projections (8a, 8b) are formed by bending the ring ends (6a, 6b), which are widened radially outwards, out of the ring plane.

4. Retaining ring as claimed in Claim 3, **characterised in that** the two through holes (9a, 9b) extend perpendicular to the ring plane before bending.

5. Retaining ring as claimed in one of Claims 1 to 4, **characterised in that** each through hole (9a, 9b) is a cylindrical hole extending through the projection (8a, 8b).

## Revendications

1. Anneau de sécurité, plus particulièrement anneau de blocage pour arbre, fabriqué en acier à ressort, pourvu d'une ouverture annulaire (2) et d'une fente traversante (5), au niveau de laquelle se font face deux extrémités d'anneau (6a, 6b), chacune pourvue d'une ouverture de passage (9a, 9b) et s'élargissant radialement vers l'extérieur par rapport à l'anneau contigu,
dans lequel la largeur radiale de l'anneau de part et d'autre de l'axe de symétrie va au moins par segments en s'accroissant d'une façon continue dans le voisinage et en partant des extrémités d'anneau (6a, 6b) élargies,
**caractérisé en ce que** les deux extrémités d'anneau (6a, 6b) façonnées en L sont pourvues chacune d'une partie en saillie (8a, 8b) qui est dirigée hors du plan de l'anneau et qui sont chacune pourvues d'une ouverture de passage (9a, 9b), **en ce que** les deux ouvertures de passage (9a, 9b) sont disposées du même côté du plan de l'anneau, **en ce que** les deux ouvertures de passage (9a, 9b) s'étendent parallèlement l'une par rapport à l'autre et au plan de l'anneau, **en ce que** les ouvertures de passage (9a, 9b) s'étendent parallèlement par rapport à l'axe de symétrie (10), et **en ce que** les deux parties en saillie (8a, 8b) se trouvent dans un plan commun, orienté perpendiculairement par rapport au plan de l'anneau.

2. Anneau de sécurité suivant la revendication 1, **caractérisé en ce que** le plan est disposé parallèlement au plan tangentiel s'étendant perpendiculairement par rapport à l'axe de symétrie (10) de l'ouverture annulaire (2).

3. Anneau de sécurité suivant l'une des revendications 1 à 2,
**caractérisé en ce que** les deux parties en saillie (8a, 8b) sont façonnées en repliant hors du plan de l'anneau les extrémités d'anneau (6a, 6b) qui vont en s'élargissant radialement vers l'extérieur.

4. Anneau de sécurité suivant la revendication 3,
**caractérisé en ce que**, préalablement au pliage, les deux ouvertures de passage (9a, 9b) sont orientées perpendiculairement au plan de l'anneau.

5. Anneau de sécurité suivant l'une des revendications 1 à 4,
**caractérisé en ce que** chaque ouverture de passage (9a, 9b) est constituée d'un trou cylindrique s'étendant à travers la partie en saillie (8a, 8b).
